# EUROPEAN PATENT APPLICATION

(11) **EP 2 503 631 A1**
(43) Date of publication of application: **26.09.2012**
(21) Application number: 11002478.3
(22) Date of filing: 24.03.2011
(51) Int. Cl.: H01M 8/12, H01M 4/88, C04B 35/462, C04B 35/486, C04B 35/50, C04B 35/44, C04B 35/64, B01D 53/22, B01D 69/12, B01D 71/02, B01D 67/00, C23C 28/00, C01B 13/02

(54) **Method for producing ceramic devices by sintering in a low pO2 atmosphere and using sintering additives comprising a transition metal**

(71) Applicant: Technical University of Denmark, 2800 Kgs. Lyngby (DK)
(72) Inventor: Ramousse, Séverine, 4000 Roskilde (DK); Klemensø, Trine, 4000 Roskilde (DK); Larsen, Peter Halvor, 6400 Soenderborg (DK)
(74) Representative: Grünecker, Kinkeldey, Stockmair & Schwanhäusser

(57) **Abstract**

The present invention provides a method for producing a ceramic device in a low pO₂ atmosphere, comprising the steps of:
- providing a composition comprising a base material and a transition metal;
- forming a first layer of said composition;
- optionally forming at least one layer on one side or both sides of said first layer; and
- sintering the multilayer structure in a low pO₂ atmosphere;
characterized in that
- the amount of the transition metal is from 0.01 to 4 mol%, based on the composition of the first layer;
- the oxygen partial pressure pO₂ is 10⁻¹⁴ Pa or less; and
- the sintering temperature is in the range of from 700 to 1600°C.

## Description

The invention relates to a method for producing a ceramic device in a low pO₂ atmosphere, employing specific sintering aids. The obtained ceramic device is suitable as an electrochemical device such as, for example, solid oxide cell (SOC) applications, including solid oxide fuel cells (SOFCs) and solid oxide electrolysis cells (SOECs); ceramic membrane applications and flue gas purification devices.

### Prior art

Ceramic devices include electrochemical devices which convert chemically bound energy directly into electrical energy (current). More specific examples of ceramic electrochemical devices are solid oxide cells, which, depending on the desired application, may be solid oxide fuel cells or solid oxide electrolysis cells. Due to their common basic structure, the same cell may be used in SOFC applications as well as SOEC applications. Since in SOFCs fuel is fed into the cell and converted into power, while in SOECs power is applied to produce fuel, these cells are often referred to as 'reversible' SOCs.

Solid oxide cells may have various designs, including planar and tubular cells. Typical configurations include an electrolyte layer being sandwiched between two electrode layers. During operation of the cell, usually at temperatures of about 500°C to about 1100°C, one electrode is in contact with oxygen or air, while the other electrode is in contact with a fuel gas.

The voltage of a single cell is around 1 volt, depending on the fuel and oxidant used. To obtain higher voltage and power from the SOCs, it is therefore necessary to stack many cells together. The most common manufacturing method for SOC planar stacks comprises the manufacture of single cells. The cells are subsequently stacked together with interconnects, current collectors, contact layers and seals. After assembly, the stacks are consolidated/sealed by heat treatment under a vertical load to ensure sealing as well as electrical contact between the components.

Other ceramic electrochemical devices include separation membranes and flue gas purification devices, which are also multilayered structures with a central layer sandwiched between two electrode layers. As with SOC structures, these layers are also typically made from various inorganic or organic materials, including ceramics, metals and polymers. For example, ceramic separation membrane structures can be an oxygen ion conducting layer, or mixed ionic and electronic conducting layer, placed between two electrodes, which cause selective permeation of oxygen ions at high temperatures, such as temperatures of about 500°C or more. The process may either be facilitated by applying current to the electrodes, or by the internal mixed ionic and electronic conduction of the membrane layer. Membranes comprising at least a layer of said ceramic materials sandwiched between two layers comprising catalyst material, i.e. electrode layers, are therefore suitable to separate oxygen from oxygen containing gas mixtures.

The most common manufacture processes for the above described structures suggested in the prior art comprise the provision of a support, on which a layer comprising catalyst material, i.e. an electrode layer, or a precursor layer thereof, is formed, followed by the application of an electrolyte layer or membrane layer. The so formed multilayer structure is dried and afterwards sintered, with sintering temperatures up to 1600°C. Finally, a second layer comprising catalyst material, or precursor layer thereof, i.e. a second electrode layer, is formed thereon so as to obtain a complete cell or membrane structure. The second electrode layer may also be formed and sintered together with the first three layers. Alternatively, one of the layers may be used as a support layer, having a thickness of about 300 µm or more, thereby making a separate support layer obsolete.

The sintering temperature of the device is critical for finetuning the properties of the respective layers, and lower sintering temperatures are required so that cheap materials and cheaper fabrication costs can be used so as to allow mass production of the ceramic electrochemical devices. Due to the high sintering temperatures still required, the choice of materials is however limited to those which can withstand these high temperatures without decomposition or unwanted side reactions, such as oxidation or passivation processes. Furthermore, since metal as a cheap material has been suggested, the sintering step of the ceramic electrochemical device has to be carried out in a low *p*O₂ atmosphere to avoid the oxidation of the metal. However, to date, processes suggested in the prior art still require sintering temperatures which are too high to allow for sufficiently broad choice of materials which can employed, especially in a reducing or low pO₂ atmosphere. Said temperatures also add to the overall manufacturing costs of the device, thus not allowing for mass production of the devices to date.

US-A-6,902,790 discloses a process for obtaining a ceramic sheet suitable for planar solid oxide fuel cells, comprising the steps of forming a green sheet of preferably yttria stabilized zirconia (YSZ) which further comprises a reinforcing oxide dispersed therein, followed by a drying step and sintering at temperatures of up to 1550°C in air. As reinforcing oxides, preferably oxides of Ti, Nb, Al, Ga, In, Ge and Sn are employed.

US-A-5,807,642 relates to ceramic bodies used as manifolds in SOFC stacks. The ceramic body is composed of barium and strontium titanates, which contain additives serving as modifiers of the thermal expansion coefficient (TEC) or as sintering/processing aids. Said additives may be oxides, borides, carbides, nitrides, and fluorides. The ceramic bodies are formed as green sheets, which are sintered in air at temperatures of about 1500°C.

WO 2006/074932 discloses a method for producing a multilayer structure, comprising the steps of:
- providing a composition comprising a Fe-Cr alloy powder and at least one of the oxides of Fe, Cr, Ni, Co, Zn, Cu;
- forming a first layer of said composition;
- forming at least one additional layer on one side of said first layer;
- heat treating said layers in an oxygen-containing atmosphere; and
- sintering in a reducing atmosphere so as to provide a final alloy,
wherein the amount of Fe in the final alloy of the first layer after the sintering step is in the range of from about 50-90% by weight, based on the total weight of the final alloy. The composition may comprise at least one oxide of V, Zr, Ce, Y, Ti, Nb, Sr, Hf, La, Mg, Al, Ca, and Mn. Sintering temperatures are up to 1500°C, preferably up to 1300°C.

The commercialisation and mass production of electrochemical devices, such as SOCs, membranes and flue gas cleaning devices, strongly depends on establishing cost effective and highly reproducible manufacturing processes. Especially the high sintering temperatures required up to date, as exemplified by the above mentioned processes, result in high costs due to the energy consumption of the sintering step, and due to the expensive heat resistant materials and safety requirements of the apparatuses. Furthermore, the obtained electrochemical devices require materials which will survive the high sintering temperatures, thus still severely limiting the choice of (cheap) materials for the respective layer components, especially in reducing or low pO₂ atmospheres required if metal as a cheap material shall be employed.

### Object of the present invention

In view of the above, it is therefore the object of the present invention to provide an improved method for producing a ceramic device in a low pO₂ atmosphere in which the sintering temperature is lowered, thus resulting in a more cost efficient process, and at the same time allowing more freedom in the selection of suitable materials for the ceramic devices.

### Brief description of the invention

Said object is achieved by a method for producing a ceramic device in a low pO₂ atmosphere, comprising the steps of:
- providing a composition comprising a base material and a transition metal;
- forming a first layer of said composition;
- optionally forming at least one layer on one side or both sides of said first layer; and
- sintering the multilayer structure in a low pO₂ atmosphere;
   characterized in that
   - the amount of the transition metal is from 0.01 to 4 mol%, based on the composition of the first layer;
   - the oxygen partial pressure (pO₂) is 10⁻¹⁴ Pa or less; and
   - the sintering temperature is in the range of from 700 to 1600°C.

Preferred embodiments are set forth in the subclaims and the following detailed description.

### Brief description of the Figures

Figure 1 is a micrograph of a sintered zirconia layer having a gradient of the amount of niobium from leftright to rightleft after sintering at 1237°C.
Figure 2 is a micrograph of a sintered structure without a niobium additive (left) and without said additive (right) after sintering at 1237°C.
Figure 3 is a sample having a gradient of the amount of niobium from right to left after sintering at 1233°C.
Figure 4 is a sample without having a niobium gradient, and being sintering using identical conditions as for the sample illustrated in Figure 3.

### Detailed description of the invention

In the following, the invention will be described in more detail.

The present invention provides a method for producing a ceramic device in a low pO₂ atmosphere, comprising the steps of:
- providing a composition comprising a base material and a transition metal;
- forming a first layer of said composition;
- optionally forming at least one layer on one side or both sides of said first layer; and
- sintering the multilayer structure in a low pO₂ atmosphere;
   characterized in that
   - the amount of the transition metal is from 0.01 to 4 mol%, based on the composition of the first layer;
   - the oxygen partial pressure pO₂ is 10⁻¹⁴ Pa or less; and
   - the sintering temperature is in the range of from 700 to 1600°C.

In the method of the present invention, advantageously a composition comprising a base material and a transition material in a specific amount is used to form a first layer, which is then sintered under low pO₂ conditions. This specific combination allows for the sintering temperature to be lowered, as compared to the processes of the prior art, and in return results in an overall more cost effective process without sacrificing the reproducibility and reliability of the process.

Due to lower sintering temperatures required, the energy costs for operating the sintering apparatus as well as the costs for obtaining same are reduced, as the specific materials for the apparatus do not need to withstand the so far required high sintering temperatures. Accordingly, the sintering apparatus can be built from cheaper materials, making the process more cost efficient. Moreover, the low pO₂ sintering temperatures advantageously lead to less strain of the device materials, prolonging their life time. Unwanted side reactions of the employed materials for the cell at high temperatures during the sintering step are also reduced or avoided, further improving the overall performance of the device and its life time.

The process advantageously allows for more freedom in selecting suitable materials for the respective device layers, including the use of metals or metal alloys. Due to the possibility of new materials being employed, cheaper materials may be used, in return lowering the overall price of the devices. Even more, tailor-made layers may be manufactured; having improved physical properties, such as similar thermal expansion coefficients, and it is possible to form more stable layers, layers which are less susceptible to oxidation, and layers with lower thermal stresses, and the like. Consequently, the life time of the devices may be extended, and properties, such as the mechanical stability against stress or shock absorbance, are improved.

Moreover, advantageously the degree of density or degree of remaining porosity, of the first layer can be fine tuned due to the amount of transition metal, depending on the desired application of the device. If the layer is to be used as, for example, an electrolyte layer for SOCs, or as a separation membrane, the layer is required to be a dense or gas tight. If said first layer is however used in a flue gas cleaning device, said layer requires a certain degree of porosity.

Generally, the method of the present invention comprises the optional step of forming at least one layer on the first layer. This additional layer can be formed on one side only, or, alternatively, two additional layers are formed on one side of the first layer. Of course, even more additional layers can be formed on top of one of the optional layer(s) if desired, depending on the intended application of the ceramic device.

The porosity of the optional additional layers, which may for example be used as an electrode or electrode precursor layer in case of a SOC, is higher than that of the first layer, which in case of a SOC is intended as an electrolyte layer. The porosity nevertheless depends on the employed sintering temperature. If sintering at high temperatures, such as 1450°C, is carried out, usually pore formers have to be added to obtain the required porosity of the optional additional layers because at said temperatures, the porosity of the additional layers would be too low for many applications. As the sintering temperature is however advantageously lowered with the method of the present invention, the amount of said pore former additives contained in the additional layers may be reduced or even omitted, in return further reducing the material costs. Also, another source of impurities may be omitted, reducing the number of produced faulty or poorly performing devices.

Finally, a problem occurring during the production of multilayer structures for ceramic devices at high temperatures is the interdiffusion and reaction between materials of adjacent layers. Generally speaking, the higher the temperature especially during the sintering step is, the higher the amount of interdiffusion between adjacent layers will be. As the sintering temperature is however advantageously lowered with the method of the present invention, the amount of interdiffusion is reduced or suppressed, leading to less unwanted side reactions.

### - Formation of the first layer

The composition for the formation of the first layer comprises a base material and a transition metal.

Preferred materials for the base material include materials selected from the group consisting of zirconate, cerate, titanate, lanthanate, aluminate, doped zirconia and/or doped ceria, wherein the dopants are selected from the group of Ca, Ga, Sc, Y, and lanthanide elements. Preferred lanthanide element dopants include Ce and Sm and Gd. In a more preferred embodiment, the materials are selected from the group consisting of doped zirconia and/or doped ceria, and in particular doped zirconia, wherein the dopants are selected from the group of Ca, Ga, Sc, Y, and lanthanide elements.

The transition metal for the first layer is preferably selected from the group consisting of one of the elements of Co, Cr, Fe, Li, Mn, Nb, Si, Ta, V, and Zn. More preferred transition metals are selected from the group consisting of one of the elements of Cr, Nb, Ta, and V, with Nb and Ta being particularly preferred.

In the composition for the first layer, the transition metal is preferably present in form of an oxide, as metal ion, or as a minor (< 2 wt%) metal component of an alloy, preferably a Fe-Cr alloy or a Fe-Cr-Al alloy. Most preferred metals are the metal ions of Nb and Ta, for example in form of a salt, or Nb and Ta metal as alloy elements in an alloy, more preferably in 15-30% Cr-based stainless steel.

In the composition the transition metal can function as a sintering aid and allows for lower sintering conditions in a low pO₂ atmopshere. Said transition metal is generally comprised in the composition in an amount of from 0.01 to 4 mol%, more preferably of from 0.01 to 2 mol%, and most preferably of from 0.1 to 0.5 mol%, based on the component total of the composition. The mol% relate to the transition metal as used in form of the respective compound added to the mixture, preferably in form of an oxide, an ion, or a metal (alloy). Due to the overall low amounts of transition metal, there is no interference with the backbone structure of the base material forming the first layer, and the propeties of the backbone in the later ceramic device are maintained.

Most preferred for the composition of the first layer is a combination of doped zirconia as the base material and niobium in form of an oxide or ion, as the transition metal.

In a first step of the method of the present invention, the first layer is formed. The components of the composition are preferably mixed with a solvent to form a suspension. Said suspension may then be used to form the first layer, preferably employing methods such as tape casting, or extrusion. The suspension may also comprise further additives, such as surfactants and binders. Moreover, for obtaining a porous first layer, the suspension my preferably comprise pore formers, such as carbon particles/fibres or corn flower. Additional sintering aids may also be added if desired. The suspension may comprise said additives in a total amount of from about 0.1 to about 80 wt%, based on the total weight of the suspension.

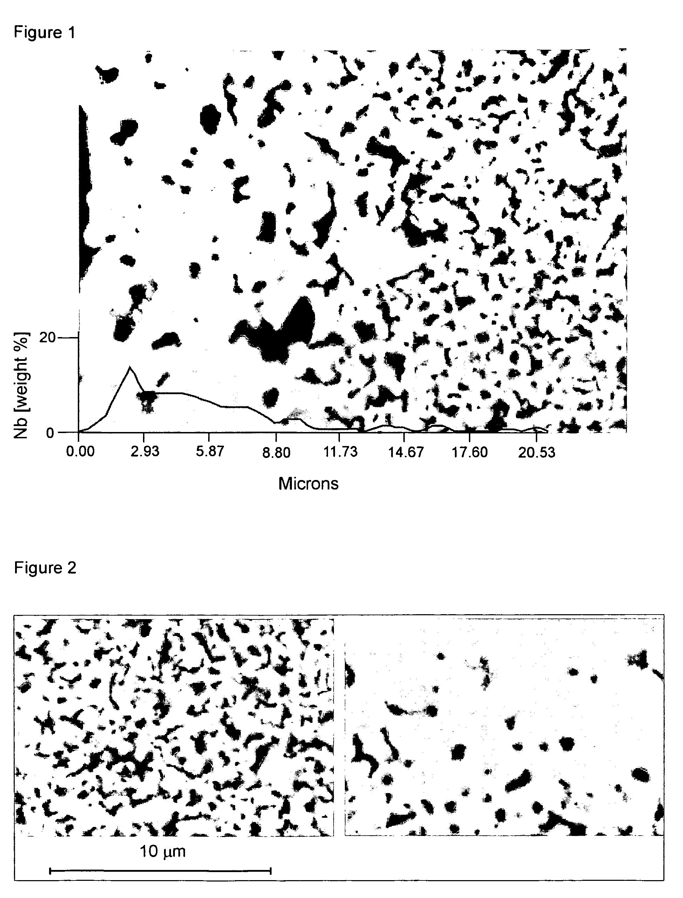

Figure 1 is a micrograph of a cross section of a zirconia layer after a sintering step at 1237°C in a low pO₂ atmosphere comprising 9% by volume of hydrogen, wherein the layer further comprises niobium as a gradient. The part to right is void of niobium, resulting in a less dense or porous structure, while the part to the left comprises niobium as a sintering additive, resulting in a completely dense layer.

Figure 2 illustrates the structure of a sintered zirconia layer. An increased densification of the areas where Nb is present (right) is observed after sintering at 1237°C in low pO₂, demonstrating the effect of niobium as a sintering aid in a zirconia layer. The same structure, but without the additive, is shown to the left. Accordingly, a lower sintering temperature is required for the zirconia layer with the respective density as compared to methods known in the prior art to date. In the used sample, the amount of Nb as the transition metal in the sintered zirconia layer is 3.5 mol%. Due to said addition, the sintering temperature can advantageously be lowered by at least 100°C, as compared to the same layer without addition of Nb.

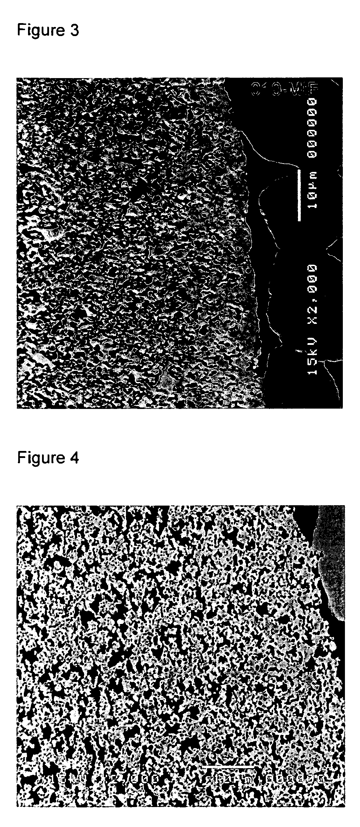

Figure 3 is a sample having a gradient of the amount of niobium from right to left after sintering at 1233°C. A source of niobium is illustrated to the right. The layer directly in contact with the niobium source showed an increased densification due to niobium which diffused into said layer from the source.

For comparison, Figure 4 illustrates a sample being identical to the sample of Figure 3, but without any niobium source. All other conditions are identical. As is evident from a comparison with Figure 3, the dense layer of Figure 3 at the interface is missing.

In another preferred embodiment, the first layer is formed on a support. The support provides additional mechanical stability of the final device and allows for a thinner first layer. If a support is used, the support is preferably a metallic support. More preferably, the support comprises a Fe_{1-x-y}CrₓMa_{y} alloy, wherein Ma is Ni, Ti, Ce, Mn, Mo, W, Co, La, Y, or Al, and/or NiO + metal oxides such as TiO₂ or Cr₂O₃. In the above formula, x and y are preferably of from 0 to 1, more preferably of from 0.2 to 0.8, and most preferably of from 0.3 to 0.7. Due to the reduced sintering temperatures in a reducing atmosphere, the metallic support does not undergo unwanted side reactions. Furthermore, a metallic support provides more mechanical stability and robustness, as compared to ceramic supports, and is cheap, thus being very cost effective.

If no separate support is used, the first layer may, for example, be preferably formed as a relatively thick layer and functions itself as a support layer for any optional layer which may be applied thereon. In case the first layer also functions as a support layer, the thickness thereof is preferably of from 150 to 500 µm, more preferably of from 200 to 300 µm. If the layer does not function as a support, the thickness of the layer may be as thin as required by the respective application, for example from 5 to 140 µm, more preferably of from 10 to 100 µm. Due to the layer also functioning as a support layer, an additional method step to provide a separate support can be omitted.

### - Formation of the optional layer(s)

In the method of the present invention, optionally at least one layer on one side or both sides of said first layer may be formed. Depending on the intended application, the materials can be chosen to match the desired function. The layers can be applied with any suitable method known in the art, for example, by tape casting, screen printing or spray painting.
In a preferred embodiment, the method comprises the application of two layers on the first layer, one on each side thereof. Such a trilayer structure is preferably used in SOCs in combination with the support layer.

In case of a trilayer structure intended for SOCs, the preferred materials for the optional layers which later function as electrode layers are LSM (La₁₋ₓSrₓ)MnO_{3-δ}), (Ln₁₋ₓSrₓ)MnO_{3-δ}, (Ln₁₋ₓSrₓ)CoO_{3-δ}, (Ln₁₋ₓSrₓ)Fe_{1-y}Co_{y}O_{3-δ}, (Y₁₋ₓCaₓ)Fe_{1-y}Co_{y}O_{3-δ}, (Gd₁₋ₓSrₓ)Fe_{1-y}Co_{y}O_{3-δ}, (Gd₁₋ₓCaₓ)Fe_{1-y}Co_{y}O_{3-δ}, (Y,Ca)Fe_{1-y}Co_{y}O_{3-δ}, doped ceria, and doped zirconia, or mixtures thereof. Ln = lanthanides. The dopants are the same as mentioned under the section for the formation of the first layer. In the formula, x and y ≤ 0 < 1, preferably from 0.1 to 0.9, and more preferably from 0.2 to 0.8.

δ in the above formulae is a number for the oxygen deficiency in the lattice and is dependant on composition and the actual oxygen partial pressure (as pO₂ decreases δ will increase). The number will typically be between 0 and about 0.3, and preferably δ is from 0.05 to 0.25.

If the optional layers are applied in form of a precursor layer, the respective layers can be converted into the respective electrode layers by either comprising catalyst precursor material which is reduced into the catalyst material during the sintering step in the low pO₂ atmosphere, or by impregnation with catalyst or catalyst precursor material after the sintering, as is known to a person skilled in the art.

### - Sintering of the multilayer structure

After the formation of all desired layers, the structure is preferably heat-treated so as to burn out any organic components. The heat treatment is preferably performed at temperatures in the range of from about 300-700°C, and more preferred in the range of from about 350-650°C.

The sintering step is generally carried out at temperatures of from 700 to 1600°C, more preferably from 800 to 1500°C, and most preferably of from 850 to 1300°C. For doped zirconia based samples, sintering temperatures from 1100-1300 °C are required depending on layer compositions, and the addition of a sintering aid. For ceria-based oxides, sintering temperatures between 1050-1300 °C are required depending on other comprising device layers and the addition of sintering aid. Ceria will densify at lower temperatures in low pO₂ sintering compared to sintering in air.

The sintering step is carried out under low pO₂ conditions. Low pO₂ conditions in the sense of the present invention are defined as an atmosphere with a low partial pressure of oxygen. Such low pO₂ conditions may be in form of a vacuum, in the presence of an inert gas or in the presence of other gases different from O₂, such as CO, CO₂, H₂ and mixtures thereof. Independent from the kind of atmosphere or vacuum, the critical parameter is the oxygen partial pressure, which must be 10⁻¹⁴ Pa or less. Preferably, the oxygen partial pressure pO₂ in the atmosphere is 10⁻¹⁵⁴ Pa or less, more preferably 10⁻¹⁶ Pa or less, and most preferably 10⁻¹⁸ Pa or less.

In a preferred embodiment, the atmosphere is a vacuum. In this case of the sintering atmosphere being a vacuum, the overall pressure of the atmosphere is preferably 10² Pa or less, more preferably 10⁻¹ Pa or less, and most preferably 10⁻² Pa or less. Of course, the oxygen partial pressure in the vacuum must still be 10⁻¹⁴ Pa or less.

In another preferred embodiment, case other gases besides oxygen are present in the sintering atmosphere., tln case the overall pressure of the atmosphere is desired to be less than atmospheric pressure, the overall pressure of the atmosphere is preferably 10² Pa or less, more preferably 10⁻¹ Pa or less, and most preferably 10⁻² Pa or less.

If low pO₂ gas is present, the overall pressure of the atmosphere In another preferred embodiment, the pressure of the sintering atmosphere is is preferably atmospheric pressure. In this case, the oxygen partial pressure is 10⁻¹⁴ Pa or less, and the atmosphere comprises an inert gas, CO, CO₂ and/or H₂.

In a further preferred embodiment, the pressure of the sintering atmosphere oris slightly higher than atmospheric pressure, i.e. between 2·10⁵ to 1·10⁵ Pa. The pO₂ is 10⁻¹⁴ Pa or less, preferably 10⁻¹⁵⁴ Pa or less, more preferably 10⁻¹⁶ Pa or less, and most preferably 10⁻¹⁸ Pa or less. The remaining pressure is constituted by pH₂, pCO, pCO₂ and/or inert gas, depending on the gas composition. In a more preferred embodiment wherelf only hydrogen is present, the pH₂ is above 10⁵ Pa. If an inert mixture with H₂ or CO/CO₂ gas is present, the pH₂ or _{P}CO+CO₂ will be related to the ratio in the gas mixture. Examples of suitable gas mixtures are mentioned below.

The pO₂ is determined using potentiometric oxygen sensors in combination with the sintering furnace. The principle of the sensor described by Joachim Maier in "Ionic and mixed conductors for electrochemical devices", Radiation Effects & Defects in Solids, 2003, Vol. 158, pp. 1-10.

The sintering step is further preferably carried out in a low pO₂ atmosphere which can comprise hydrogen, an inert gas and hydrogen, hydrogen and CO/CO₂ mixtures, or vacuum. Specific Eexamples of suitable inert gases being present in the sintering atmosphere are noble gases such as He, Ne, N₂, Ar, and Kr, with Argon being preferred. Examples of suitable hydrogen and CO/CO₂ mixtures are 75 vol% H₂ and 25 vol% CO, or 30-50 vol% H₂, 18-25 vol% CO, 28-48 vol% N₂, traces of CO₂. The atmosphere further preferably comprises hydrogen in an amount of from 1 to 20 % by volume, more preferably of from 2 to 10%, and most preferably of from 3 to 9%. Also preferred is a pure hydrogen atmosphere. In another embodiment, a mixture of hydrogen and CO/CO₂ is preferred. In another embodiment, vaccum is preferred. The specific atmosphere is dependent on the specific material employed and its reactivity with, or stability in a particular gas mixture.

The ceramic device obtained with the method of the present invention is suitable for use as, for example, a solid oxide fuel cell or solid oxide electrolysis cell, as a ceramic membrane, or as a flue gas purification device. The design of the device may be fine tuned as desired, including planar and tubular designs.

Advantageously, due to the use of a base material in combination with a transition metal in a low pO₂ sintering atmosphere, the sintering temperature can be lowered, resulting in less operation costs and cheaper equipment while allowing the use of cheaper materials, such as metals, in the cell. Further, the lower sintering temperatures decrease the inherent material degradation associated with high temperature processing, such as corrosion and interdiffusion. Moreover, if dense and porous layers are present at the same time, the porosity can be more easily optimised due to the lower sintering temperatures. Furthermore, the fabrication of higher porosity layers is facilitated due to less or no pore formers, and the interdiffusion and unwanted side reactions of materials into adjacent layers can be prevented.

In the following, the invention will be illustrated by examples. Alternative embodiments and examples exist without departing from the scope of the present invention.

### Examples

### Example 1: Manufacture of a metal-supported solid oxide cell

The first step comprises tape-casting of four layers (layer 1 - metal support layer, layer 2 - anode layer, layer 3 - electrolyte layer and layer 4 - cathode layer). Suspensions for tape-casting are manufactured by means of ball milling of powders with polyvinyl pyrrolidone (PVP), polyvinyl butyral (PVB) and EtOH + MEK as additives. After control of particle size, the suspensions are tape-cast using a double doctor blade set-up and the tapes are subsequently dried.

Layer 1: The suspension is based on FeCr alloy, using charcoal as a poreformer. The dried thickness is about 400 µm. The sintered porosity of the layer is about 30%.
Layer 2: The suspension is based on Y-doped ZrO₂ with FeCr metal powder using charcoal as a poreformer. The dried thickness of the foil is about 30 µm. The sintered density of the layer is about 30 %.
Layer 3: The suspension comprises Y-SSZ and 0,1 mol% of Nb₂O₅. The dried thickness is about 20 µm. The sintered density of the layer is >96 % of the theoretical density (with closed porosity).
Layer 4: The suspension comprises (Ce_{0.9}Gd₀.₁)O_{2-δ}, using charcoal as poreformers. The dried thickness of the foil is about 50 µm. The sintered density of the layer is about 40 %.

The second step comprises the lamination of the above mentioned foils into a layered structure comprising an electrolyte layer sandwiched between two electrode precursor layers, with the mechanically supporting layer on the anode side. The lamination is performed by the use of heated rolls and applied pressure in a double roll set-up and takes place in one pass.

In the third step, the laminated tapes are cut into square pieces. This is done by knife punching resulting in sintered areas in the range of 5x5 to 30x30 cm².

The fourth step comprises sintering. The laminate is first heated with a temperature increase of about 50 °C/h to about 500°C under flowing air. After 2 hours of exposure at this temperature, the furnace is evacuated and 9 vol% H₂/Ar mixture is introduced. After 3 hours of exposure time with this gas flow, the furnace is heated to about 1200 °C with a temperature increase of 100 °C/h and left for 5 hours before cooling to room temperature. The pO₂ reached at sintering temperature is below 10⁻¹⁵ atm.

The fifth step is the impregnation of cathode. The sintered cell is closed on the anode side. A nitrate solution of La, Sr, Co and Fe is vacuum infiltrated into the porous structure. The infiltration is performed four times with an intermediate heating step for decomposition of the nitrates. The resulting composition of the impregnated perovskite cathode is: (La₀.₆Sr_{0,4})(Co_{0.2}Fe₀.₈)O_{3-δ}.

In the sixth step the anode is impregnated. The cathode impregnated side is closed. A nitrate solution of Ni, Ce and Gd is vacuum infiltrated into the porous structure. The infiltration is performed three times with an intermediate heating schedule between each infiltration for decomposition of the impregnated nitrates. The resulting composition of the impregnated anode part is 10 vol% Ni and 90 vol% (Ce_{0.8}Gd_{0.2})O_{2-δ} (after reduction of NiO).

The so formed cell is ready to be built into a stack of cells. No heat treatment prior to stacking is required.

### Example 2: Manufacture of a separation membrane device

The first step comprises tape casting a porous metal support layer in a similar way as described in example 1.

Layer 1 - The suspension is based on Fe-Cr-Al alloy where a water-based polyvinyl acetate (PVA) slurry is used, and no pore-former is added. The layer thickness is 1000 µm. The sintered porosity is about 40%.

The second step comprising spray-coating the second layer onto the green (dried but not sintered) metal tape.

Layer 2 - The suspension comprises a mix of (Ce_{0.9}Gd_{0.1})O_{2-δ} and Fe-Cr-Al metal powder. The layer thickness is about 30 µm, and the sintered density about 30%.

In the third step, the samples are cut by knife punching into samples of size 2x2 to 30x30 cm²_{.}

Step four comprises co-sintering Layer 1 and Layer 2 in 9% H₂/Ar mixture with pO₂ below 10⁻¹⁵ at 1250°C for 2 hours.

Step five comprises deposition of a membrane layer, which could be undertaken by spray-coating, electrophoretic deposition or physical vapour techniques. The membrane layer (e.g. (Ce_{0.9}Gd₀.₁)O_{2-δ} and 0,1 mol% Nb added as a sintering aid). The layer thickness is 20 µm, and density above 96%.

Step six comprises heat treatment of the membrane layer, in 9% H₂/Ar mixture with pO₂ below 10⁻¹⁵ at a temperature between 800 °C and 1100 °C for 2 hours.

The seventh step is screen printing of the layer 4 suspension on top of the membrane layer.

Layer 4 - The suspension comprises (La_{0.58}Sr₀.₄)Fe₀.₈Co₀.₂O_{3-δ} / (Ce_{0.9}Gd₀.₁)O_{2-δ} composite. The layer thickness is 30 µm, and the sintered porosity 50%.

The formed cell can be used directly as an oxygen separation membrane, for gas separation or in a membrane reactor, e.g. for production of synthesis gas, if air is provided on one side, and a fuel (e.g. CH₄) on the other side of the membrane.

### Example 3: Manufacture of a flue gas purification device

The first step comprises tape casting of 2 type of layers. The tape casting is performed as described in example 1.

Layer 1 - The suspension is based on La₀.₅₈Sr₀.₁₅CrO₃. The layer thickness is 40 µm, and the sintered porosity 45%.
Layer 2 - The suspension is based on (Ce₀.₉Gd₀.₁)O_{2-δ} and 0,1 mol% Nb added as metal ion (in the form of Nb-nitrate). The layer thickness is 15 µm, and with a sintered porosity of 45%.

The second step comprises lamination of the above mentioned layers into triple layered structures of the form layer 1 - layer 2 - layer 1. The triple layered units are further laminated together, so the triple layered structure is repeated 11 times.

In the third step, the multi-layered structure is cut by knife punching into sample areas of 30x30 cm²_{.}

The fourth step comprises debinding (as described in example 1), and sintering at 1400 °C for 3 hours, with 100 °C/h ramps and pO₂ of 10⁻¹⁵.

The so formed sintered structure can be built into a flue gas purification set-up.

### Comparative Example 1: Manufacture of a metal-supported solid oxide cell

The first step comprises tape-casting of four layers (layer 1 - metal support layer, layer 2 - anode layer, layer 3 - electrolyte layer and layer 4 - cathode layer). Suspensions for tape-casting are manufactured by means of ball milling of powders with polyvinyl pyrrolidone (PVP), polyvinyl butyral (PVB) and EtOH + MEK as additives. After control of particle size, the suspensions are tape-cast using a double doctor blade set-up and the tapes are subsequently dried.

Layer 1: The suspension is based on FeCr alloy, using charcoal as a poreformer. The dried thickness is about 400 µm. The sintered porosity of the layer is about 30%.
Layer 2: The suspension is based on Y-doped ZrO₂ with FeCr metal powder using charcoal as a poreformer. The dried thickness of the foil is about 30 µm. The sintered density of the layer is about 30 %.
Layer 3: The suspension comprises Y-SSZ. The dried thickness is about 20 µm. The sintered density of the layer is >96 % of the theoretical density (with closed porosity).
Layer 4: The suspension comprises (Ce₀.₉Gd₀.₁)O_{2-δ}, using charcoal as poreformers. The dried thickness of the foil is about 50 µm. The sintered density of the layer is about 40 %.

The second and third steps correspond to the second and third step of Example 1.

The fourth step comprises sintering. The laminate is first heated with a temperature increase of about 50 °C/h to about 500 °C under flowing air. After 2 hours of exposure at this temperature, the furnace is evacuated and 9 vol% H₂/Ar mixture is introduced. After 3 hours of exposure time with this gas flow, the furnace is heated to about 1200 °C with a temperature increase of 100 °C/h and left for 5 hours before cooling to room temperature. The pO₂ reached at sintering temperature is below 10⁻¹⁵ atm.

After sintering, the obtained sintered structure was examined regarding the structure of layer 3. Due to the omission of niobium oxide, the layer did not have the required density for the sintered structure to be used as a solid oxide cell since the sintering temperature was not sufficient to density layer 3 to the required density.

### Comparative Example 2: Manufacture of a metal-supported solid oxide cell

A multilayer structure was obtained in accordance with Comparative Example 1. The laminate is first heated with a temperature increase of about 50 °C/h to about 500 °C under flowing air. After 2 hours of exposure at this temperature, the furnace is evacuated and 9 vol% H₂/Ar mixture is introduced. After 3 hours of exposure time with this gas flow, the furnace is heated to about 1300 °C with a temperature increase of 100 °C/h and left for 5 hours before cooling to room temperature. The pO₂ reached at sintering temperature is below 10⁻¹⁵ atm.

Examination of the obtained sintered structure showed that layer 1 could not withstand the higher sintering temperatures and the sintered structure was not suitable to be used in a solid oxide cell.

## Claims

1. A method for producing a ceramic device in a low pO₂ atmosphere, comprising the steps of:
- providing a composition comprising a base material and a transition metal;
- forming a first layer of said composition;
- optionally forming at least one layer on one side or both sides of said first layer; and
- sintering the multilayer structure in a low pO₂ atmosphere;
**characterized in that**
- the amount of the transition metal is from 0.01 to 4 mol%, based on the composition of the first layer;
- the oxygen partial pressure pO₂ is 10⁻¹⁴ Pa or less; and
- the sintering temperature is in the range of from 700 to 1600°C.

2. The method according to claim 1, wherein the base material for the first layer is selected from the group consisting of zirconate, cerate, titanate, lanthanate, aluminate, doped zirconia and/or doped ceria, wherein the dopants are selected from the group of Ca, Ga, Sc, Y, and lanthanide elements.

3. The method according to claim 2 wherein the base material for the first layer is selected from the group consisting of doped zirconia and/or doped ceria, wherein the dopants are selected from the group of Ca, Ga, Sc, Y, and lanthanide elements.

4. The method according to any one of claims 1 to 3, wherein the transition metal is selected from the group consisting of one of the elements of Co, Cr, Fe, Li, Mn, Nb, Si, Ta, V, and Zn.

5. The method according to claim 4, wherein the transition metal is selected from the group consisting of one of the elements of Cr, Nb, Ta, and V.

6. The method of any one of claims 1 to 5, wherein the transition metal is present in the composition in form of an oxide, an ion, or metal element.

7. The method according to any one of claims 1 to 6, wherein the sintering step is carried out at temperatures of from 800 to 1500°C.

8. The method according to any one of claims 1 to 7, wherein in the pO₂ in the reducing atmosphere is 10⁻¹⁶ Pa or less.

9. The method according to any one of claims 1 to 8, wherein the low pO₂ atmosphere comprises an inert gas and from 2 to 10 % by volume of hydrogen, or H₂ or H₂/CO/CO₂ mixtures, or vacuum.

10. The method according to any one of claims 1 to 9, wherein the amount of the transition metal is from 0.01 to 1 mol%, based on the composition of the first layer.

11. The method according to any one of claims 1 to 10, wherein the transition metal is tantalum or niobium.

12. The method according to any one of claims 1 to 11, wherein the transition metal is niobium.

13. The method according to any one of claims 1 to 12, wherein the base material for the first layer is doped zirconia, wherein the dopants are selected from the group of Ca, Ga, Sc, Y, and lanthanide elements.

14. The method according to any one of claims 1 to 13, further comprising the step of forming a third layer on the at least one layer on either side of said first layer.

15. The method according to any one of claims 1 to 14, wherein the first layer and the optional layer(s) are formed on a support.

16. The method of claim 15, wherein the support is a metallic support.

17. The method according to any one of claims 1 to 16, wherein the ceramic device is a ceramic electrochemical device.

18. The method according to any one of claims 1 to 17, wherein the ceramic device is a solid oxide fuel cell or solid oxide electrolysis cell.
